# EUROPEAN PATENT SPECIFICATION

(11) **EP 4 587 320 B1**
(45) Date of publication and mention of the grant of the patent: **06.05.2026**
(21) Application number: 23769330.4
(22) Date of filing: 12.09.2023
(51) Int. Cl.: B62J 9/24, B62J 9/27

(54) **TILTING AND SUPPORT KIT FOR AT LEAST ONE LUGGAGE**
KIPP- UND STÜTZKIT FÜR MINDESTENS EIN GEPÄCKSTÜCK
KIT D'INCLINAISON ET DE SUPPORT POUR AU MOINS UN BAGAGE

(30) Priority: 13.09.2022 IT 202200018654
(43) Date of publication of application: 23.07.2025
(73) Proprietor: Givi S.p.A., 25020 Flero (BS) (IT)
(72) Inventor: VISENZI, Giuseppe, 25100 Brescia (BS) (IT)
(74) Representative: Biallo, Dario
(86) International application number: PCT/IB2023/059028
(87) International publication number: WO 2024/057202

(56) References cited:
- WO-A1-2020/245732
- CN-U- 211 592 793
- US-A1- 2015 191 210

## Description

The present invention relates to a tilting and support kit.

WO 2020/245732 A1, to the Applicant, is known in the state of the art as disclosing a tilting and support kit for at least one luggage of a motorcycle, said tilting and support kit comprising a support frame adapted to be associated with a frame of said motorcycle, wherein said support frame comprises at least two portions, a first portion and a second portion, wherein said first portion is spaced from said second portion, wherein said first portion is arranged along a first geometrical axis and said second portion is arranged along a second geometrical axis, wherein said first geometrical axis is parallel to said second geometrical axis. The kit comprises support means that are adapted to separately engage said support frame and said at least one luggage, wherein said support means comprise at least a first support means adapted to engage said first portion of said support frame and a first portion of said at least one luggage corresponding to said first portion of said support frame and at least a second support means adapted to engage said second portion of said support frame and a second portion of said at least one luggage corresponding to said second portion of said support frame. Said kit comprises at least a tilting device comprising a support base and at least one hook-shaped element, wherein said at least one hook-shaped element comprises at least one spacer arm comprising a first end hinged with said support base and a second end, which comprises a hook portion adapted to hook said first portion of said support frame with said first portion of said at least one luggage, said at least one hook-shaped element being adapted to rotate hinged from an unhooking position to a hooking position. Said unhooking position of said at least one hook-shaped element provides that said hook portion unhooks said first portion of said support frame from said first portion of said at least one luggage. Said hooking position of said at least one hook-shaped element provides that said hook portion hooks said first portion of said support frame to said first portion of said at least one luggage. Said tilting and support kit is adapted to pass from a travel configuration to a tilted configuration. Said travel configuration of said tilting and support kit provides that said at least a first support means and said at least a second support means engage said at least one luggage with said support frame, and that said hook-shaped element of said tilting device is in said unhooking position. Said tilted configuration of said tilting and support kit provides that said at least a first support means disengages said first portion of said at least one luggage from said first portion of said support frame, that said at least a second support means engages said second portion of said at least one luggage with said second portion of said support frame, that said at least one luggage is tilted of an angle relative to a third geometrical axis and that said hook-shaped element is in said hooking position, wherein said third geometrical axis is coplanar to a geometrical plane passing through said first geometrical axis and through said second geometrical axis, wherein said third geometrical axis is perpendicular to said first and said second geometrical axis.

Disadvantageously, the release sliding block of the tilting device is not easily accessible and it is not possible to block the tilting device in the hooking position.

The object of the present invention is to make available a tilting and support kit for side luggages so that the lids of the side luggages can be fully opened even when a luggage is mounted with a top support frame, that the kit ensures a safe support of the luggage even when the luggage is tilted, that the kit allows the luggage to remain engaged with the support frame even when it is tilted, that both the hooking position and unhooking position can be locked, and that the two hooking and unhooking positions can be easily changed from an easily accessible and visible position.

According to the invention, such object is achieved with a tilting and support kit according to claim 1.

Other features are provided in the dependent claims.

The features and advantages of the present invention will be more apparent from the following description, which is to be understood as exemplifying and not limiting, with reference to the appended schematic drawings, in which:
Figure 1 shows a plan view from the rear of a motorcycle which mounts two tilting and support kits for luggages arranged at the sides of the motorcycle according to the present invention in a tilted configuration, each kit comprises a side support frame, each of which mounts a luggage, the motorcycle also mounts an upper support frame which mounts another luggage;
Figure 2 shows a perspective view of the luggage disassembled from the support frame, wherein the luggage mounts a tilting device comprising a hook-shaped element rotated on a pin upwards in an tilted configuration, i.e. in a position adapted to hook the hook-shaped element with a first upper tubular element of the support frame;
Figure 3 is a side plan view of Figure 2;
Figure 4 is a side plan view of Figure 2;
Figure 5 is a plan view of the tilting and support device with the hook-shaped element in the unhooked position and a cam in the locked position with a base of the tilting and support device;
Figure 6 is a section view according to the line VI-VI of Figure 5;
Figure 7 is a section view according to the line VII-VII of Figure 5;
Figure 8 is a section view according to the line VIII-VIII of Figure 6;
Figure 9 shows a perspective view of the tilting and support device with the hook-shaped element in the hooking position and with the cam in the disengaging position from the support base;
Figure 10 is a section view of Figure 9 along a line similar to VI-VI of Figure 5;
Figure 11 is a section view according to the line XI-XI of Figure 10;
Figure 12 shows an exploded view of the tilting and support device showing a pin, torsion spring, support base, hook-shaped element and cam;
Figure 13 shows a perspective view of the support frame that mounts the first upper support means and two second lower support means, wherein each second lower support means comprises a stem which comprises a head of greater transverse dimensions relative to the transverse dimensions of the stem;
Figure 14 shows a perspective view of a support frame alternative to the one shown in Figure 13 which mounts a single first upper support means.

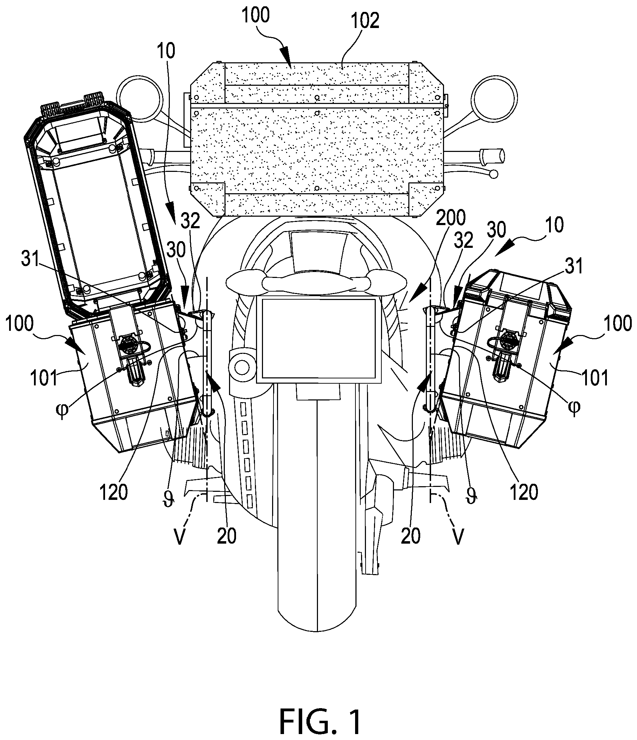

With reference to the aforementioned figures and in particular Figure 1, a motorcycle is shown that mounts two tilting and support kits 10 for luggages 100, 101 arranged at the sides of the motorcycle. Each of the two kits 10 is in the tilted configuration. Each kit 10 comprises a side support frame 20, each of which mounts a side luggage 101. The motorcycle also mounts an upper support frame 20 which mounts another upper luggage 100, 102.

The tilting and support kit 10 for at least one luggage 100, 101 of a motorcycle is mounted at the sides in the figures.

The support frame 20 is adapted to be associated to a frame 200 of said motorcycle.

As shown in Figures 1, 13-14 said support frame 20 comprises at least two tubular elements 21-24, a first tubular element 21 and a second tubular element 22.

Said first tubular element 21 is an upper portion of said support frame 20 and said second tubular element 22 is a lower portion of said support frame 20.

The support frame 20 shown in the figures comprises four tubular elements 21-24.

Said first tubular element 21 is spaced from said second tubular element 22. Said first tubular element 21 is arranged along a first upper geometrical axis U and said second tubular element 22 is arranged along a second lower geometrical axis L, wherein said first geometrical axis U is parallel to said geometrical axis L.

The tilting and support kit 10 comprises support means 40, 50 mounted with said support frame 20 and adapted to be separably engaged with said at least one luggage 100, 101.

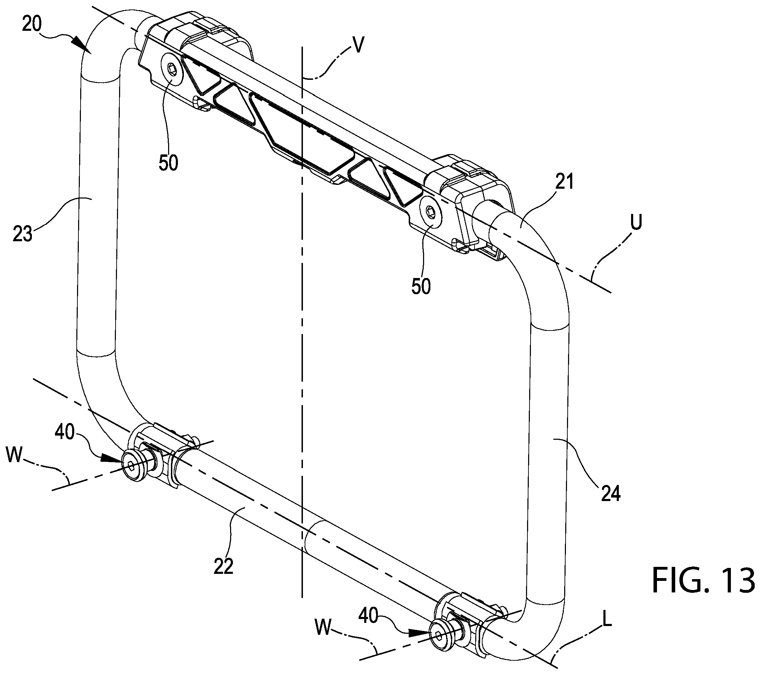

As shown in Figure 13 said support means 40, 50 comprise two first upper support means 50 mounted with said first upper tubular element 21 and two second lower support means 40 mounted with said second lower tubular element 22.

The kit 10 comprises engaging means 150, 140 mounted with said at least one luggage 100, 101.

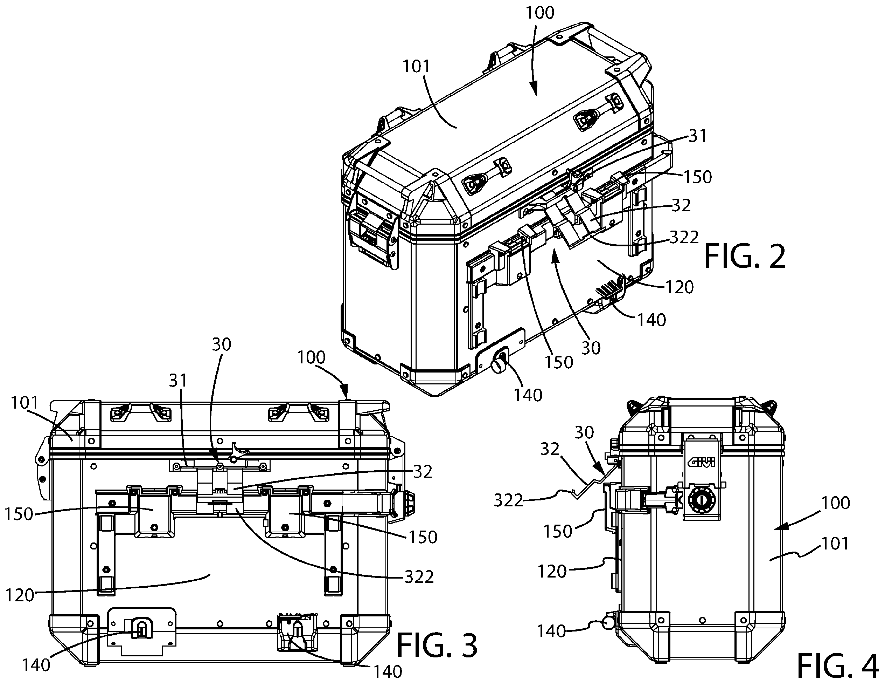

Said engaging means 140, 150 shown in the Figures 2-4 comprise two first upper engaging means 150 adapted to be engaged with two first upper support means 50 and two second lower engaging means 140, each second lower engaging means 140 is adapted to be engaged with said at least a second support means 40.

As shown in particular in Figures 2-4, said first engaging means 150 is mounted with an upper portion of said at least one luggage 100, 101 and said second engaging means 140 is mounted with a lower portion of said at least one luggage 100, 101.

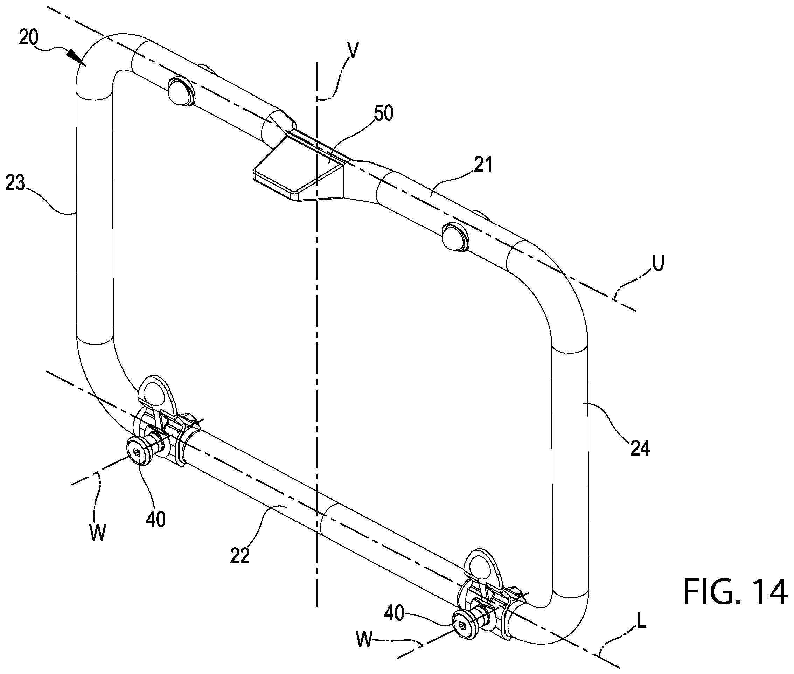

As shown in particular in Figures 13 and 14 said at least one second support means 40 mounted with said second lower tubular element 22 comprises a stem which extends along a longitudinal axis W from said second tubular element 22. Said stem comprises a head. Said head has transverse dimensions greater than transverse dimensions of said stem. The transverse dimensions are measured on a transverse geometrical plane which is perpendicular to said longitudinal axis W along which the stem extends.

As shown in the figures said head has a mushroom shape adapted to be quickly connected to a complementary opening of the second lower engaging means 140.

Said second support means 40 is adapted to pass from an engaging configuration with said second engaging means 140 to a disengaging position from said second engaging means 140.

Advantageously the second support means 40 allows the luggage 100, 101 to tilt maintaining the second support means 40 engaged with said second engaging means 140.

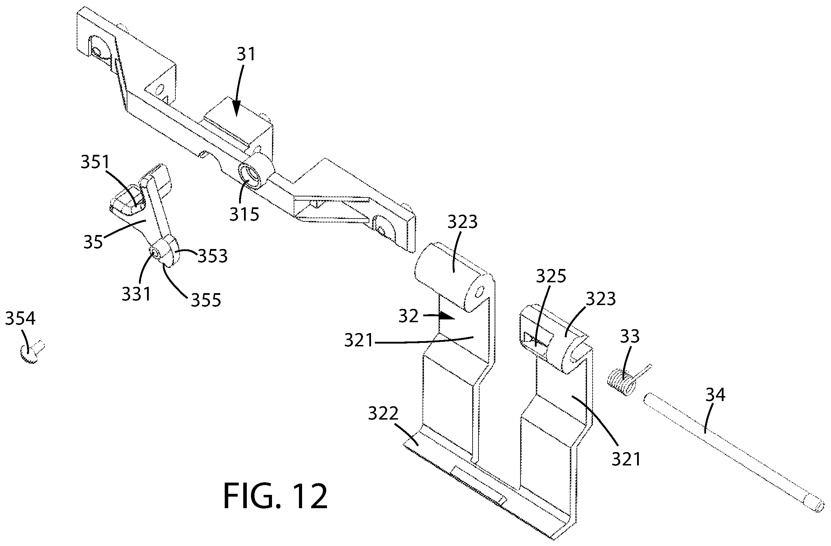

As shown in particular in Figures 2-12, the kit 10 comprises a tilting device 30 comprising a support base 31 mounted with said at least one luggage 100, 101 and at least one hook-shaped element 32.

Said hook-shaped element 32 comprises two spacer arms 321. Each spacer arm 321 comprises a first end 323 hinged with said support base 31. A second end of the two spacer arms 321 comprises a hook portion 322 adapted to hook said first tubular element 21.

Said hook-shaped element 32 is adapted to rotate hinged from an unhooking position to a hooking position.

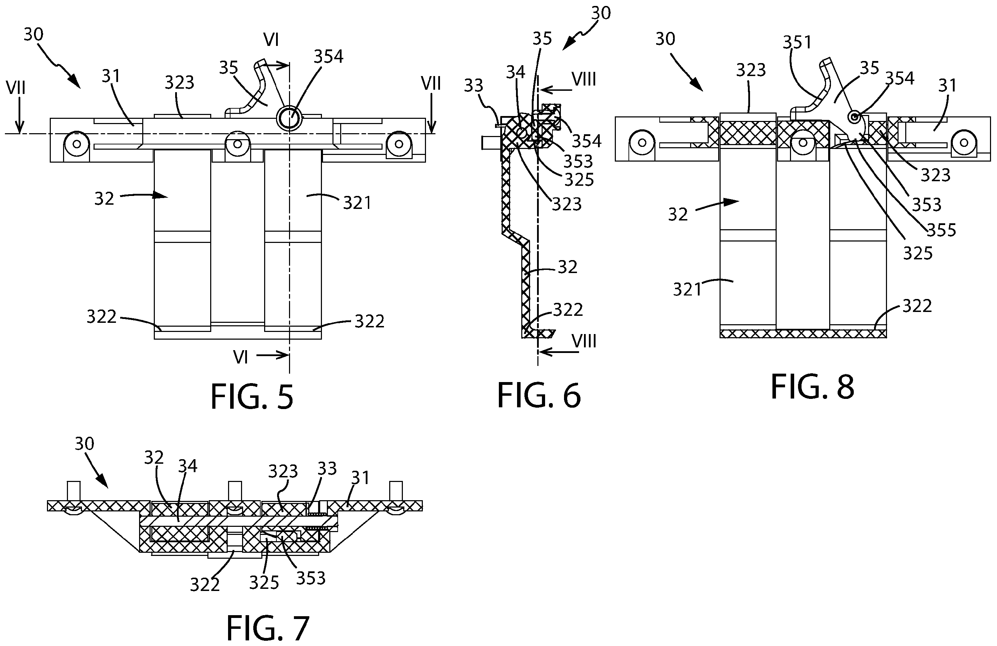

Said unhooking position of said hook-shaped element 32 provides that said hook portion 322 is unhooked from said first tubular element 21 as shown in Figures 5-8.

Said hooking position of said at least one hook-shaped element 32 provides that said hook portion 322 is hooked to said first tubular element 21 as shown in Figures 1, 2-4, 9-11.

Said tilting and support kit 10 being adapted to pass from a travel configuration to a tilted configuration.

As shown in the Figures said travel configuration of said tilting and support kit 10 provides that said at least a first support means 50 and said at least a second support means 40 are engaged with said at least one luggage 100, 101 and that said hook-shaped element 32 of said tilting device 30 is in said unhooking position,

As shown in the Figures said tilted configuration of said tilting and support kit 10 provides that said first support means 50 is unhooked from said luggage 100, 101, that said second support means 40 is engaged with said luggage 100, 101, that said luggage 100, 101 is tilted of an angle θ relative to a third geometrical axis V and that said hook-shaped element 32 is in said hooking position.

Said third geometrical axis V is coplanar to a geometrical plane passing through said first geometrical axis U and through said second geometrical axis L, wherein said third geometrical axis V is perpendicular to said first U and said second geometrical axis L.

As shown in Figure 1 if the tilting and support kit 10 is mounted at the sides of the frame 200 of the motorcycle, then the third geometrical axis V is a vertical axis perpendicular to the ground.

The angle θ is between 0 and 60 sexagesimal degrees.

A constraint to the extension of the angle θ depends on the length of the spacer arms 321 of the hooked element 32 of the tilting device 30.

Another constraint to the extension of the angle θ depends on the length of the stem and on the transverse dimensions of the head of the second support means 40, as the dimensions of the stem and of the head constrain the maximum engaging angle between the second support means 40 and the second engaging means 140. Beyond said maximum engaging angle the luggage 100, 101 is disengaged, at least at the bottom, from the support frame 20.

As shown in particular in Figures 5-12 said first end 323 of said spacer arms 321 of said tilting device 30 is hinged with said support base 31 by means of a pin 34 which mounts a torsion spring 33.

Said pin 34 is arranged along a fourth geometrical axis H, wherein said fourth geometrical axis H is parallel to said first geometrical axis U and consequently is parallel to said second geometrical axis L.

Said torsion spring 33 passes from a position of higher torsion to a position of lower torsion to make said hook-shaped element 32 rotate around the pin 34.

Said position of higher torsion of said torsion spring 33 corresponds to said unhooking position of said at least one hook-shaped element 32.

Said position of lower torsion of said torsion spring 33 corresponds to said hooking position of said at least one hook-shaped element 32.

As shown in Figures 5-12 said at least one tilting device 30 comprises a lever 35 rotatably mounted with said support base 31 by means of a second pin 354 which identifies a rotation axis perpendicular to the first pin 34.

Said lever 35 comprises a handleable first end 351 and a second cam-shaped end 353.

The second cam-shaped end 353 eccentrically hinges said second pin 354 as shown in particular in Figures 8, 11 and 12.

Said first end 323 of said at least one spacer arm 321 of said at least one tilting device 30 comprises a contact portion 325 in contact with said second cam-shaped end 353 of said lever 35.

Advantageously, the contact portion 325 always remains in contact with the second cam-shaped end 353 in any position of the lever 35.

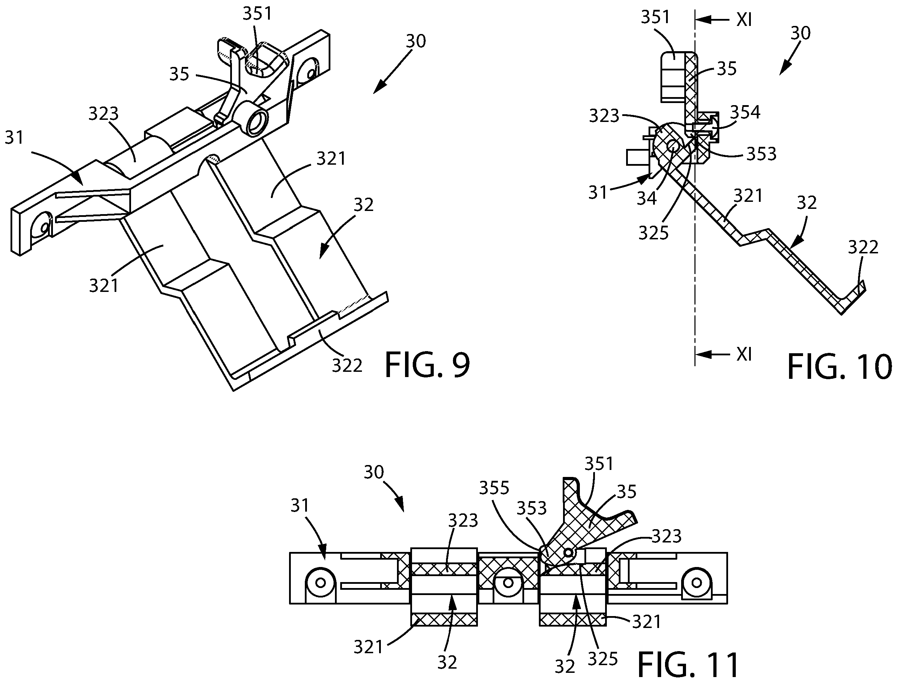

Said lever 35 passes from a first position wherein a distance between said second pin 354 and said contact portion 325 is maximum, as shown in particular in Figure 8, to a second position wherein said distance between said second pin 354 and said contact portion 325 is minimum, as shown in particular in Figure 11.

Said first position of the lever 35 corresponds to said unhooking position of said at least one hook-shaped element 32.

Said second position of the lever 35 corresponds to said hooking position of said at least one hook-shaped element 32.

Even more advantageously, said cam-shaped portion 353 of said lever 35 comprises an arc-shaped form, wherein said arc-shaped form comprises a first arc end which mounts said second pin 354 and a second arc end which is distant from said first arc end as shown in Figures 5-12.

Even more advantageously, said second arc end of said cam-shaped portion 353 of said lever 35 comprises a flat portion 355 that keeps blocked the first position of the lever 35 which provides that said flat portion 355 remains in contact with the contact portion 325 of said first end 323 of said at least one spacer arm 321 of said at least one tilting device 30.

Even more advantageously said contact portion 325 of said first end 323 of said at least one spacer arm 321 of said at least one tilting device 30 is curvilinear in shape.

The curvilinear shape of the contact portion 325 is complementary to the arc shape of the cam-shaped end 353 of the lever 35 to advantageously allow for greater distance between the second pin 354 and the surface of the contact portion 325.

It is pointed out that said greater torsion position of said torsion spring 33 corresponds to said unhooking position of said at least one hook-shaped element 32 and to said first position of said lever 35, while said lesser torsion position of said torsion spring 33 corresponds to said hooking position of said at least one hook-shaped element 32 and to said second position of said lever 35.

By rotating the lever 35 from the second to the first position said at least one hook-shaped element 32 is gradually returned to the unhooking position and the luggage can be unhooked normally.

As shown in particular in Figures 5-12 said hook portion 322 of said spacer arm 321 comprises a wall of a shape complementary to a shape of said first tubular element 21 of said support frame 20. When said hook portion 322 is hooked with said first tubular element 21, then the wall of a complementary shape adheres for at least a portion with an external surface of said first tubular element 21.

The first end 323 of the hook-shaped element 32 hinged with said support base 31 is provided to be arranged on an upper portion of the luggage 100, 101 so that once the lever 35 passes from the first position to the second position, the hook-shaped element 32 can rotate hinged and pushed by the torsion spring 33 from said unhooking position wherein the hooked element 32 is adhering to a rear face 120 of the luggage 100, 101 to the hooking position of said hook-shaped element 32 with said first tubular element 21. Said hook portion 322 of the hook-shaped element 32 engages the first tubular element 21 from below. The complementary wall of the hook portion 322 embraces the first tubular element 21 for at least a portion of the diameter of the first tubular element 21.

In the tilted configuration of the kit 10 a second angle φ between the third geometrical axis V and the spacer arm 321 as shown in Figures 5-12 is less than 90 sexagesimal degrees, as the tilting device 30 is blocked in the first and second position by the lever 35.

Said support base 31 of the tilting device 30 is mounted with the rear face 120 of the luggage 100, 101 facing the support frame 20. Said engaging means 140 and 150 are provided mounted with the rear face 120 of the luggage 100, 101.

Advantageously the tilting and support kit 10 for luggages 100 provides that a lid of the luggage 100 can be completely opened even in the presence of a luggage mounted so as to block the opening of the lid when the kit 10 is in the travel configuration.

Advantageously the kit 10 ensures a secure support for the luggage 100 even when the luggage 100 is tilted.

Advantageously the kit 10 allows the luggage 100 to remain engaged **with** the support frame 20 also in the tilted position.

Advantageously, the kit 10 allows both the engaging and disengaging positions to be blocked.

Advantageously, the kit 10 allows the two hooking and unhooking positions to be easily changed from an easily accessible and visible position.

Alternatively, it is possible to provide that the support frame 20 comprises only the first tubular element 21 and the second tubular element 22.

Alternatively, it is possible to provide that the luggage 100 can also mount two or more tilting devices 30.

Alternatively, it is possible to provide that the tilting and support kit 10 for at least a luggage 100, 101 of a motorcycle can be mounted above the motorcycle in place of the upper support frame 20 in order to be able to tilt the upper luggage 102 relative to a geometric plane defined by the support frame 20. In this alternative the first tubular element 21 is at the front, while the second tubular element 22 is at the rear and the upper luggage 102 tilts of the angle θ upwards. Again alternatively depending on how we wish to tilt the luggage, the first tubular element 21 is at the rear and the second tubular element 22 is at the front.

Alternatively, it is possible to provide that the side luggage 101 can be tilted towards the front or the rear and in this case, the first tubular element 21 and the second tubular element 22 are side tubular elements of the support frame 20.

Alternatively, it is possible to provide that the luggage 100, 101, 102 is replaced by a similar bulk, for example a tank or a saddle bag or other accessory as bulky as a luggage.

Alternatively, it is possible to provide that the support means 40, 50 are engaged directly with the luggage 100 without engaging means 150, 140.

Alternatively, as shown in Figure 14 there is only one support means 50 which is a lug and which provides an alternative first engaging means 150 which is an opening passing through said lug.

As shown in particular in Figure 1 in the tilted configuration of the kit 10 the second angle φ between the third geometrical axis V and the spacer arms 321 is preferably an angle greater than 90 sexagesimal degrees so that the spacer arms 90 hangs from the top downwards, wherein the first end 323 hinged with said support base 31 is arranged at a height greater than the second end of the hook portion 322 engaged with said first tubular element 21. The height is measured relative to the third geometrical axis V starting from the second geometrical axis L and going towards the first geometrical axis U.

Alternatively the second angle φ between the third geometrical axis V and the spacer arm 321 is between 10 and 170 sexagesimal degrees.

Alternatively, it is possible to provide that the support frame 20 is a metal sheet or plate adapted to be associated to the frame 200 of said motorcycle, wherein said alternative support frame 20 comprises at least two portions 21-24, a first portion 21 and a second portion 22, wherein said first portion 21 is spaced from said second portion 22. Said first portion 21 is an upper portion of the support frame 20 and said second portion 22 is a lower portion of the support frame 20. Said first portion 21 is arranged along the first geometrical axis U and said second portion 22 is arranged along the second geometrical axis L, wherein said first geometrical axis U is parallel to said second geometrical axis L.

Again alternatively, but not claimed, it is provided that said support frame 20 is integral with said frame 200 of said motorcycle, so that the support means 40, 50 are mounted with said frame 200 of the motorcycle.

Alternatively the torsion spring 33 may be replaced by another equivalent elastic element, or the pin 34 and spring 33 system may be replaced by a counterweight without spring.

Alternatively said support means 40, 50 are mounted with said at least one luggage 100, 101, 102, where said at least a first support means 50 is mounted with said first portion of said at least one luggage 100, 101, 102 and said at least a second support means 40 is mounted with said second portion of said at least one luggage 100, 101, 102.

Alternatively said support base 31 of said at least one tilting device 30 is mounted with said support frame 20, wherein said hook portion 322 is adapted to hook said first portion of said at least one luggage 100, 101, 102.

The invention thus conceived is susceptible to many modifications and variants. In practice, the materials used, as well as their dimensions, can be of any type according to the technical requirements.

## Claims

1. Tilting and support kit (10) for at least one luggage (100, 101, 102) of a motorcycle, said tilting and support kit (10) comprises
a support frame (20) adapted to be associated with a frame (200) of said motorcycle, wherein said support frame (20) comprises at least two portions (21-24), a first portion (21) and a second portion (22), wherein said first portion (21) is spaced from said second portion (22), wherein said first portion (21) is disposed along a first geometrical axis (U) and said second portion (22) is disposed along a second geometrical axis (L), wherein said first geometrical axis (U) is parallel to said second geometrical axis (L),
support means (40, 50) which are adapted to separably engage said support frame (20) and said at least one luggage (100, 101, 102), wherein said support means (40, 50) comprise at least a first support means (50) adapted to engage said first portion (21) of said support frame (20) and a first portion of said at least one luggage (100, 101, 102) corresponding to said first portion (21) of said support frame (20) and at least a second support means (40) adapted to engage said second portion (22) of said support frame (20) and a second portion of said at least one luggage (100, 101, 102) corresponding to said second portion (22) of said support frame (20),
at least one tilting device (30) comprising a support base (31) and at least one hook-shaped element (32), wherein said at least one hook-shaped element (32) comprises at least one spacer arm (321) comprising a first end (323) hinged with said support base (31) and a second end which comprises a hook portion (322) adapted to hook said first portion (21) of said support frame (20) to said first portion of said at least one luggage (100, 101, 102), said at least one hook-shaped element (32) being adapted to rotate hinged from an unhooking position to a hooking position,
said unhooking position of said at least one hook-shaped element (32) provides that said hook portion (322) unhooks said first portion (21) of said support frame (20) from said first portion of said at least one luggage (100, 101, 102),
said hooking position of said at least one hook-shaped element (32) provides that said hook portion (322) hooks said first portion (21) of said support frame (20) to said first portion of said at least one luggage (100, 101, 102),
said tilting and support kit (10) being adapted to pass from a travel configuration to a tilted configuration,
said travel configuration of said tilting and support kit (10) provides that said at least a first support means (50) and said at least a second support means (40) engage said at least one luggage (100, 101, 102) with said support frame (20) and that said hook-shaped element (32) of said tilting device (30) is in said unhooking position,
said tilted configuration of said tilting and support kit (10) provides that said at least a first support means (50) disengages said first portion of said at least one luggage (100, 101, 102) from said first portion (21) of said support frame (20), that said at least a second support means (40) engages said second portion of said at least one luggage (100, 101, 102) with said second portion (22) of said support frame (20), that said at least one luggage (100, 101, 102) is tilted of an angle (θ) relative to a third geometrical axis (V) and that said hook-shaped element (32) is in said hooking position, wherein said third geometrical axis (V) is coplanar to a geometrical plane passing through said first geometrical axis (U) and through said second geometrical axis (L), wherein said third geometrical axis (V) is perpendicular to said first (U) and said second geometrical axis (L),
wherein said first end (323) of said at least one spacer arm (321) of said at least one tilting device (30) is hinged with said support base (31) by means of a first pin (34),
wherein said pin (34) is disposed along a fourth geometrical axis (H), wherein said fourth geometrical axis (H) is parallel to said first geometrical axis (U),
**characterised in that**
said at least one tilting device (30) comprises a lever (35) rotatably mounted with said support base (31) by means of a second pin (354) that identifies a rotation axis perpendicular to the first pin (34),
wherein said lever (35) comprises a handleable first end (351) and a cam-shaped second end (353),
wherein the cam-shaped second end (353) eccentrically hinges said second pin (354),
wherein said first end (323) of said at least one spacer arm (321) of said at least one tilting device (30) comprises a contact portion (325) in contact with said cam-shaped second end (353) of said lever (35),
wherein said lever (35) passes from a first position wherein a distance between the second pin (354) and said contact portion (325) is maximum, to a second position wherein said distance between the second pin (354) and said contact portion (325) is minimum,
wherein said first position of the lever (35) corresponds to said unhooking position of said at least one hook-shaped element (32),
wherein said second position of the lever (35) corresponds to said hooking position of said at least one hook-shaped element (32).

2. Tilting and support kit (10) according to claim 1, **characterized in that** said cam-shaped portion (353) of said lever (35) comprises an arch-shaped form, wherein said arch-shaped form comprises a first arch end mounting said second pin (354) and a second arch end away from the first arch end.

3. Tilting and support kit (10) according to claim 2, **characterized in that** said second arch end of the cam-shaped portion (353) of said lever (35) comprises a flat portion (355) that keeps blocked the first position of the lever (35) providing that said flat portion (355) remains in contact with the contact portion (325) of said first end (323) of said at least one spacer arm (321) of said at least one tilting device (30).

4. Tilting and support kit (10) according to any one of claims 1-3, **characterized in that** said contact portion (325) of said first end (323) of said at least one spacer arm (321) of said at least one tilting device (30) is of curvilinear in shape.

5. Tilting and support kit (10) according to any one of claims 1-4, **characterized in that** said first pin (34) mounts a torsion spring (33),
wherein said torsion spring (33) passes from a greater torsion position to a lesser torsion position,
wherein said greater torsion position of said torsion spring (33) corresponds to said unhooking position of said at least one hook-shaped element (32) and to said first position of said lever (35),
wherein said lesser torsion position of said torsion spring (33) corresponds to said hooking position of said at least one hook-shaped element (32) and to said second position of said lever (35).

6. Tilting and support kit (10) according to any one of claims 1-5, **characterized in that** said hook portion (322) of said spacer arm (321) comprises a wall of a shape complementary to a shape of said first portion (21) of said support frame (20).

7. Tilting and support kit (10) according to any one of claims 1-6, **characterized in that** said support base (31) of said at least one tilting device (30) is mounted with said at least one luggage (100, 101, 102), wherein said hook portion (322) is adapted to hook said first portion (21) of said support frame (20).

8. Tilting and support kit (10) according to any one of claims 1-7, **characterized by** comprising engaging means (140, 150) mounted with said at least one luggage (100, 101, 102), said engaging means (140, 150) comprising at least a first engaging means (150) adapted to be engaged with said at least a first support means (50) and at least a second engaging means (140) adapted to be engaged with said at least a second support means (40).

9. Tilting and support kit (10) according to claim 8, **characterized in that** said first engaging means (150) is mounted with said first portion which is an upper portion of said at least one luggage (100, 101, 102) and said second engaging means (140) is mounted with said second portion which is a lower portion of said at least one luggage (100, 101, 102), said first portion (21) is an upper portion of said support frame (20) and said second portion (22) is a lower portion of said support frame (20).

10. Tilting and support kit (10) according to any one of the preceding claims, **characterized in that** said at least two portions of said support frame (20) are at least two tubular elements (21-24), said first portion (21) is a first tubular element and said second portion is a second tubular element (22), wherein said first tubular element (21) is disposed along said first geometrical axis (U) and said second tubular element (22) is disposed along said second geometrical axis (L).

## Patentansprüche

1. Kipp- und Stützkit (10) für mindestens ein Gepäckstück (100, 101, 102) eines Motorrads, wobei die Kipp- und Stützkit (10) umfasst
einen Stützrahmen (20), der mit einem Rahmen (200) des Motorrads verbunden werden kann, wobei der Stützrahmen (20) mindestens zwei Abschnitte (21-24), einen ersten Abschnitt (21) und einen zweiten Abschnitt (22), umfasst, wobei der erste Abschnitt (21) von dem zweiten Abschnitt (22) beabstandet ist, wobei der erste Abschnitt (21) entlang einer ersten geometrischen Achse (U) angeordnet ist und der zweite Abschnitt (22) entlang einer zweiten geometrischen Achse (L) angeordnet ist, wobei die erste geometrische Achse (U) parallel zu der zweiten geometrischen Achse (L) ist,
Stützmittel (40, 50), die geeignet sind, mit dem Stützrahmen (20) und dem mindestens einen Gepäckstück (100, 101, 102) trennbar in Eingriff zu kommen, wobei die Stützmittel (40, 50) mindestens ein erstes Stützmittel (50), das geeignet ist, mit dem ersten Abschnitt (21) des Stützrahmens (20) und einem ersten Abschnitt des mindestens einen Gepäckstücks (100, 101, 102), der dem ersten Abschnitt (21) des Tragrahmens (20) entspricht, und mindestens ein zweites Stützmittel (40), das so angepasst ist, dass es mit dem zweiten Abschnitt (22) des Tragrahmens (20) und einem zweiten Abschnitt des mindestens einen Gepäcks (100, 101, 102), der dem zweiten Abschnitt (22) des Tragrahmens (20) entspricht, in Eingriff kommt,
mindestens eine Kippvorrichtung (30), die eine Stützbasis (31) und mindestens ein hakenförmiges Element (32) umfasst, wobei das mindestens eine hakenförmige Element (32) mindestens einen Abstandsarm (321) umfasst, der ein erstes Ende (323), das mit der Stützbasis (31) gelenkig verbunden ist, und ein zweites Ende umfasst, das einen Hakenabschnitt (322) umfasst, der so beschaffen ist, dass er den ersten Abschnitt (21) des Stützrahmens (20) mit dem ersten Abschnitt des mindestens einen Gepäckstücks (100, 101, 102) einzuhaken, wobei das mindestens eine hakenförmige Element (32) so angepasst ist, dass es gelenkig von einer Aushakposition in eine Einhakposition gedreht werden kann,
die Aushakposition des mindestens einen hakenförmigen Elements (32) dafür sorgt, dass der Hakenabschnitt (322) den ersten Abschnitt (21) des Tragrahmens (20) von dem ersten Abschnitt des mindestens einen Gepäckstücks (100, 101, 102) aushakt, die Einhakposition des mindestens einen hakenförmigen Elements (32) dafür sorgt, dass der Hakenabschnitt (322) den ersten Abschnitt (21) des Tragrahmens (20) an dem ersten Abschnitt des mindestens einen Gepäckstücks (100, 101, 102) einhakt, wobei die Kipp- und Stützkit (10) so ausgelegt ist, dass sie von einer Fahrkonfiguration in eine gekippte Konfiguration übergehen kann,
die Fahrkonfiguration des Kipp- und Stützbausatzes (10) vorsieht, dass das mindestens eine erste Stützmittel (50) und das mindestens eine zweite Stützmittel (40) das mindestens eine Gepäckstück (100, 101, 102) mit dem Stützrahmen (20) in Eingriff bringen und dass sich das hakenförmige Element (32) der Kippvorrichtung (30) in der Aushakposition befindet, die gekippte Konfiguration des Kipp- und Stützbausatzes (10) vorsieht, dass das mindestens eine erste Stützmittel (50) den ersten Abschnitt des mindestens einen Gepäcks (100, 101, 102) von dem ersten Abschnitt (21) des Stützrahmens (20) löst, dass das mindestens eine zweite Stützmittel (40) den zweiten Abschnitt des mindestens einen Gepäcks (100, 101, 102) mit dem zweiten Abschnitt (22) des Stützrahmens (20) in Eingriff bringt, dass das mindestens eine Gepäck (100, 101, 102) um einen Winkel (θ) relativ zu einer dritten geometrischen Achse (V) geneigt ist und dass sich das hakenförmige Element (32) in der Einhakposition befindet, wobei die dritte geometrische Achse (V) koplanar zu einer geometrischen Ebene ist, die durch die erste geometrische Achse (U) und durch die zweite geometrische Achse (L) verläuft, wobei die dritte geometrische Achse (V) senkrecht zu der ersten (U) und der zweiten geometrischen Achse (L) ist,
wobei das erste Ende (323) des mindestens einen Abstandsarms (321) der mindestens einen Kippvorrichtung (30) mittels eines ersten Stifts (34) an der Stützbasis (31) angelenkt ist,
wobei der Stift (34) entlang einer vierten geometrischen Achse (H) angeordnet ist, wobei die vierte geometrische Achse (H) parallel zu der ersten geometrischen Achse (U) ist,
**dadurch gekennzeichnet, dass**
die mindestens eine Kippvorrichtung (30) einen Hebel (35) umfasst, der mittels eines zweiten Bolzens (354), der eine zum ersten Bolzen (34) senkrechte Drehachse aufweist, drehbar an der Stützbasis (31) angebracht ist,
wobei der Hebel (35) ein handhabbares erstes Ende (351) und ein nockenförmiges zweites Ende (353) aufweist,
wobei das nockenförmige zweite Ende (353) den zweiten Bolzen (354) exzentrisch schwenkt,
wobei das erste Ende (323) des mindestens einen Abstandshalters (321) der mindestens einen Kippvorrichtung (30) einen Kontaktabschnitt (325) aufweist, der mit dem nockenförmigen zweiten Ende (353) des Hebels (35) in Kontakt steht,
wobei der Hebel (35) von einer ersten Position, in der ein Abstand zwischen dem zweiten Stift (354) und dem Kontaktabschnitt (325) maximal ist, in eine zweite Position übergeht, in der der Abstand zwischen dem zweiten Stift (354) und dem Kontaktabschnitt (325) minimal ist,
wobei die erste Stellung des Hebels (35) der Aushakstellung des mindestens einen hakenförmigen Elements (32) entspricht,
wobei die zweite Stellung des Hebels (35) der Einhakstellung des mindestens einen hakenförmigen Elements (32) entspricht.

2. Kipp- und Stützkit (10) nach Anspruch 1, **dadurch gekennzeichnet, dass** der nockenförmige Abschnitt (353) des Hebels (35) eine bogenförmige Form aufweist, wobei die bogenförmige Form ein erstes bogenförmiges Ende, an dem der zweite Stift (354) angebracht ist, und ein zweites bogenförmiges Ende, das von dem ersten bogenförmigen Ende entfernt ist, aufweist.

3. Kipp- und Stützkit (10) nach Anspruch 2, **dadurch gekennzeichnet, dass** das zweite Bogenende des nockenförmigen Abschnitts (353) des Hebels (35) einen flachen Abschnitt (355) aufweist, der die erste Position des Hebels (35) blockiert hält, vorausgesetzt, dass der flache Abschnitt (355) in Kontakt mit dem Kontaktabschnitt (325) des ersten Endes (323) des mindestens einen Abstandsarms (321) der mindestens einen Kippvorrichtung (30) bleibt.

4. Kipp- und Stützkit (10) nach einem der Ansprüche 1-3, **dadurch gekennzeichnet, dass** der Kontaktabschnitt (325) des ersten Endes (323) des mindestens einen Abstandshalters (321) der mindestens einen Kippvorrichtung (30) eine gekrümmte Form aufweist.

5. Kipp- und Stützkit (10) nach einem der Ansprüche 1-4, **dadurch gekennzeichnet, dass** der erste Bolzen (34) eine Torsionsfeder (33) aufnimmt,
wobei die Torsionsfeder (33) von einer Position größerer Torsion in eine Position geringerer Torsion übergeht,
wobei die größere Torsionsstellung der Torsionsfeder (33) der Aushakstellung des mindestens einen hakenförmigen Elements (32) und der ersten Stellung des Hebels (35) entspricht,
wobei die geringere Torsionsstellung der Torsionsfeder (33) der Einhakstellung des mindestens einen hakenförmigen Elements (32) und der zweiten Stellung des Hebels (35) entspricht.

6. Kipp- und Stützkit (10) nach einem der Ansprüche 1-5, **dadurch gekennzeichnet, dass** der Hakenteil (322) des Abstandshalters (321) eine Wand mit einer Form aufweist, die komplementär zu einer Form des ersten Teils (21) des Stützrahmens (20) ist.

7. Kipp- und Stützkit (10) nach einem der Ansprüche 1-6, **dadurch gekennzeichnet, dass** die Stützbasis (31) der mindestens einen Kippvorrichtung (30) mit dem mindestens einen Gepäckstück (100, 101, 102) montiert ist, wobei der Hakenabschnitt (322) geeignet ist, den ersten Abschnitt (21) des Stützrahmens (20) einzuhaken.

8. Kipp- und Stützkit (10) nach einem der Ansprüche 1-7, **dadurch gekennzeichnet, dass** sie Eingriffsmittel (140, 150) umfasst, die an dem mindestens einen Gepäckstück (100, 101, 102) angebracht sind, wobei die Eingriffsmittel (140, 150) mindestens ein erstes Eingriffsmittel (150) umfassen, das so beschaffen ist, dass es mit dem mindestens einen ersten Stützmittel (50) in Eingriff gebracht werden kann, und mindestens ein zweites Eingriffsmittel (140), das so beschaffen ist, dass es mit dem mindestens einen zweiten Stützmittel (40) in Eingriff gebracht werden kann.

9. Kipp- und Stützkit (10) nach Anspruch 8, **dadurch gekennzeichnet, dass** das erste Eingriffsmittel (150) mit dem ersten Abschnitt, der ein oberer Abschnitt des mindestens einen Gepäcks (100, 101, 102) ist, und das zweite Eingriffsmittel (140) mit dem zweiten Abschnitt, der ein unterer Abschnitt des mindestens einen Gepäcks (100, 101, 102) ist, montiert ist, wobei der erste Abschnitt (21) ein oberer Abschnitt des Stützrahmens (20) ist und der zweite Abschnitt (22) ein unterer Abschnitt des Stützrahmens (20) ist.

10. Kipp- und Stützkit (10) nach einem der vorhergehenden Ansprüche, **dadurch gekennzeichnet, dass** die mindestens zwei Abschnitte des Stützrahmens (20) mindestens zwei rohrförmige Elemente (21-24) sind, wobei der erste Abschnitt (21) ein erstes rohrförmiges Element ist und der zweite Abschnitt ein zweites rohrförmiges Element (22) ist, wobei das erste rohrförmige Element (21) entlang der ersten geometrischen Achse (U) angeordnet ist und das zweite rohrförmige Element (22) entlang der zweiten geometrischen Achse (L) angeordnet ist.

## Revendications

1. Kit d'inclinaison et de support (10) pour au moins un bagage (100, 101, 102) d'un motocycle, ledit kit d'inclinaison et de support (10) comprenant
un cadre de support (20) adapté pour être associé à un cadre (200) de ladite moto, dans lequel ledit cadre de support (20) comprend au moins deux parties (21-24), une première partie (21) et une seconde partie (22), dans lequel ladite première partie (21) est espacée de ladite seconde partie (22), dans lequel ladite première partie (21) est disposée le long d'un premier axe géométrique (U) et ladite seconde partie (22) est disposée le long d'un second axe géométrique (L), dans lequel ledit premier axe géométrique (U) est parallèle audit second axe géométrique (L),
des moyens de support (40, 50) adaptés pour engager séparément ledit cadre de support (20) et ledit au moins un bagage (100, 101, 102), dans lesquels lesdits moyens de support (40, 50) comprennent au moins un premier moyen de support (50) adapté pour engager ladite première partie (21) dudit cadre de support (20) et une première partie dudit au moins un bagage (100, 101, 102) correspondant à ladite première partie (21) dudit cadre de support (20) et au moins un deuxième moyen de support (40) adapté pour engager ladite deuxième partie (22) dudit cadre de support (20) et une deuxième partie dudit au moins un bagage (100, 101, 102) correspondant à ladite deuxième partie (22) dudit cadre de support (20),
au moins un dispositif d'inclinaison (30) comprenant une base de support (31) et au moins un élément en forme de crochet (32), dans lequel ledit au moins un élément en forme de crochet (32) comprend au moins un bras d'écartement (321) comprenant une première extrémité (323) articulée avec ladite base de support (31) et une deuxième extrémité qui comprend une partie de crochet (322) adaptée pour accrocher ladite première partie (21) dudit cadre de support (20) à ladite première partie dudit au moins un bagage (100, 101, 102), ledit au moins un élément en forme de crochet (32) étant adapté pour pivoter d'une position de décrochage à une position d'accrochage,
ladite position de décrochage dudit au moins un élément en forme de crochet (32) permet à ladite partie de crochet (322) de décrocher ladite première partie (21) dudit cadre de support (20) de ladite première partie dudit au moins un bagage (100, 101, 102),
ladite position d'accrochage dudit au moins un élément en forme de crochet (32) permet à ladite partie de crochet (322) d'accrocher ladite première partie (21) dudit cadre de support (20) à ladite première partie dudit au moins un bagage (100, 101, 102),
ledit kit d'inclinaison et de support (10) est adapté pour passer d'une configuration de déplacement à une configuration d'inclinaison,
ladite configuration de déplacement dudit kit d'inclinaison et de support (10) prévoit que ledit au moins un premier moyen de support (50) et ledit au moins un second moyen de support (40) engagent ledit au moins un bagage (100, 101, 102) avec ledit cadre de support (20) et que ledit élément en forme de crochet (32) dudit dispositif d'inclinaison (30) se trouve dans ladite position de décrochage,
ladite configuration inclinée dudit kit d'inclinaison et de support (10) prévoit que ledit premier moyen de support (50) désengage ladite première partie dudit au moins un bagage (100, 101, 102) de ladite première partie (21) dudit cadre de support (20), que ledit au moins un deuxième moyen de support (40) engage ladite deuxième partie dudit au moins un bagage (100, 101, 102) avec ladite deuxième partie (22) dudit cadre de support (20), que ledit au moins un bagage (100, 101, 102) soit incliné d'un angle (θ) par rapport à un troisième axe géométrique (V) et que ledit élément en forme de crochet (32) soit dans ladite position d'accrochage, dans lequel ledit troisième axe géométrique (V) est coplanaire à un plan géométrique passant par ledit premier axe géométrique (U) et par ledit deuxième axe géométrique (L), dans lequel ledit troisième axe géométrique (V) est perpendiculaire audit premier (U) et audit deuxième axe géométrique (L),
dans lequel la première extrémité (323) dudit au moins un bras d'écartement (321) dudit au moins un dispositif d'inclinaison (30) est articulée avec ladite base de support (31) au moyen d'une première goupille (34),
dans lequel ledit axe (34) est disposé le long d'un quatrième axe géométrique (H), dans lequel ledit quatrième axe géométrique (H) est parallèle au premier axe géométrique (U),
**caractérisé en ce que**
ledit au moins un dispositif d'inclinaison (30) comprend un levier (35) monté rotatif avec ladite base de support (31) au moyen d'une deuxième goupille (354) qui identifie un axe de rotation perpendiculaire à la première goupille (34),
dans lequel ledit levier (35) comprend une première extrémité manipulable (351) et une deuxième extrémité en forme de came (353),
dans lequel la deuxième extrémité en forme de came (353) articule de manière excentrique ladite deuxième goupille (354),
dans lequel ladite première extrémité (323) dudit au moins un bras d'écartement (321) dudit au moins un dispositif d'inclinaison (30) comprend une partie de contact (325) en contact avec ladite deuxième extrémité en forme de came (353) dudit levier (35),
dans lequel ledit levier (35) passe d'une première position dans lequel la distance entre la deuxième goupille (354) et ladite partie de contact (325) est maximale, à une deuxième position dans lequel la distance entre la deuxième goupille (354) et ladite partie de contact (325) est minimale,
dans lequel la première position du levier (35) correspond à la position de décrochage d'au moins un élément en forme de crochet (32),
dans lequel la deuxième position du levier (35) correspond à la position d'accrochage d'au moins un élément en forme de crochet (32).

2. Kit d'inclinaison et de support (10) selon la revendication 1, **caractérisé en ce que** ladite partie en forme de came (353) dudit levier (35) comprend une forme en arc, dans lequel ladite forme en arc comprend une première extrémité d'arc montant ladite deuxième goupille (354) et une deuxième extrémité d'arc éloignée de la première extrémité d'arc.

3. Kit d'inclinaison et de support (10) selon la revendication 2, **caractérisé en ce que** ladite deuxième extrémité en arc de la partie en forme de came (353) dudit levier (35) comprend une partie plate (355) qui maintient bloquée la première position du levier (35) à condition que ladite partie plate (355) reste en contact avec la partie de contact (325) de ladite première extrémité (323) dudit au moins un bras d'écartement (321) dudit au moins un dispositif d'inclinaison (30).

4. Kit d'inclinaison et de support (10) selon l'une quelconque des revendications 1-3, **caractérisé en ce que** ladite partie de contact (325) de ladite première extrémité (323) dudit au moins un bras d'écartement (321) dudit au moins un dispositif d'inclinaison (30) est de forme curviligne.

5. Kit d'inclinaison et de support (10) selon l'une quelconque des revendications 1-4, **caractérisé en ce que** ladite première goupille (34) monte un ressort de torsion (33),
dans lequel ledit ressort de torsion (33) passe d'une position de torsion supérieure à une position de torsion inférieure,
dans lequel ladite position de plus grande torsion dudit ressort de torsion (33) correspond à ladite position de décrochage dudit au moins un élément en forme de crochet (32) et à ladite première position dudit levier (35),
dans lequel ladite position de torsion inférieure dudit ressort de torsion (33) correspond à ladite position d'accrochage dudit au moins un élément en forme de crochet (32) et à ladite seconde position dudit levier (35).

6. Kit d'inclinaison et de support (10) selon l'une quelconque des revendications 1-5, **caractérisé en ce que** ladite partie crochet (322) dudit bras d'écartement (321) comprend une paroi de forme complémentaire à une forme de ladite première partie (21) dudit cadre de support (20).

7. Kit d'inclinaison et de support (10) selon l'une quelconque des revendications 1-6, **caractérisé en ce que** ladite base de support (31) dudit au moins un dispositif d'inclinaison (30) est montée avec ledit au moins un bagage (100, 101, 102), dans lequel ladite partie de crochet (322) est adaptée pour accrocher ladite première partie (21) dudit cadre de support (20).

8. Kit d'inclinaison et de support (10) selon l'une quelconque des revendications 1-7, **caractérisé par le fait qu'**il comprend des moyens d'engagement (140, 150) montés avec ledit au moins un bagage (100, 101, 102), lesdits moyens d'engagement (140, 150) comprenant au moins un premier moyen d'engagement (150) adapté pour être engagé avec ledit au moins un premier moyen de support (50) et au moins un second moyen d'engagement (140) adapté pour être engagé avec ledit au moins un second moyen de support (40).

9. Kit d'inclinaison et de support (10) selon la revendication 8, **caractérisé en ce que** ledit premier moyen d'engagement (150) est monté avec ladite première partie qui est une partie supérieure dudit au moins un bagage (100, 101, 102) et ledit second moyen d'engagement (140) est monté avec ladite seconde partie qui est une partie inférieure dudit au moins un bagage (100, 101, 102), ladite première partie (21) est une partie supérieure dudit cadre de support (20) et ladite seconde partie (22) est une partie inférieure dudit cadre de support (20).

10. Kit d'inclinaison et de support (10) selon l'une quelconque des revendications précédentes, **caractérisé en ce que** lesdites au moins deux portions dudit cadre de support (20) sont au moins deux éléments tubulaires (21-24), ladite première portion (21) étant un premier élément tubulaire et ladite seconde portion étant un second élément tubulaire (22), ledit premier élément tubulaire (21) étant disposé le long dudit premier axe géométrique (U) et ledit second élément tubulaire (22) étant disposé le long dudit second axe géométrique (L).
